Europäisches Patentamt

European Patent Office

Office européen des brevets

(19)

(11) Publication number: **0 300 947**
A2

(12) **EUROPEAN PATENT APPLICATION**

(21) Application number: 88500072.9

(22) Date of filing: 19.07.88

(51) Int. Cl.4: **A 01 N 47/14**
    C 09 K 17/00

(30) Priority: 24.07.87 ES 8702397

(43) Date of publication of application:
25.01.89 **Bulletin 89/04**

(84) Designated Contracting States:
**BE DE FR GB GR IT NL**

(71) Applicant: **SAININ, S.A.**
**Massenet, 19**
**E-08191 Rubi (Barcelona) (ES)**

(72) Inventor: **Serrallach Julia, José Antonio**
**Beethoven No. 9**
**E-08021 Barcelona (ES)**

(74) Representative: **Gomez-Acebo y Pombo, José Miguel**
**c/o CLARKE, MODET & Co. Paseo de la Castellana 164**
**E-28046 Madrid (ES)**

(54) A pesticidal composition, method for obtaining it and its application to improve and/or regenerate the soil.

(57) This invention relates to a pesticidal composition comprising N-methyl-dithiocarbamate alkali metal salts, particularly the sodium and potassium salts, having physical and chemical and edaphic properties, together with appropriate surfactants. The invention also relates to a process for the preparation of said pesticidal composition by combining the N-methyl dithio-carbamate alkali metal salts with surfactants selected from soaps, alkyl sulfates, organic sulfates, polyglycol ethers of fatty alcohols and alkylphenols, fatty acid alkylolamides, primary amine chlorides and quaternary ammonium salts. The invention also relates to the use of this insecticidal compositions for improving and/or regenerating the soil.

Bundesdruckerei Berlin

EP 0 300 947 A2

**Description**

This invention relates to a pesticidal composition, to a process for the preparation thereof and to the application thereof to improve and/or regenerate the soil.

Currently the loss and deterioration or agricultural soils is becoming increasingly important, as caused for example by natural phenomena such as natural erosion due to rain and wind and the effect of man and, particularly, due to the intensive repeated exploitation of increasingly more impoverished land. To these phenomena there should also be added the effects of both vegetable and animal pests which contribute enormously to reducing the potential yield of a particular land. In the same way, the lands lose their texture with time, whereby they lose their capacity to benefit from natural and/or synthetic fertilizers.

In the past it was tried to solve some of these problems by using pesticides which have, nevertheless, certain drawbacks, such as toxicity for living beings, both during use and because of their residual effects. An attempt was made to overcome this problem with certain dithiocarbamates, which do not leave toxic residues, but which suffer from the drawbacks of their high cost price and of worsening the texture of the soil.

The object of this invention is to overcome these problems and, particularly, to recover land "exhausted" by intensive cultivation, to improve the quality and increase the quantity of the crops by way of a product carrying out three functions:

a) Disinfection of the soil at low cost.

b) Potentiation of the physico-chemical and edaphic properties.

c) Increase in economic yield.

The disinfection of the soil means killing the pests. With the improvement of the physico-chemical properties the disinfectant and water retention activity is potentiated, thereby improving the crops in quality and quantity and, finally, in their economic field.

Thus a first object of this invention is a pesticidal composition comprising N-methyl-dithiocarbamate alkali metals salts, particularly the sodium or potassium salts, in aqueous solution, and surfactants.

The potentiation of the physico-chemical and edaphic properties is achieved with appropriate surfactants which may belong to one of the following groups of compounds, used alone or in combination.

a) Soaps.

b) Alkyl sulphates.

c) Organic sulphonates, such as the arylalkylsulphonates.

d) Polyglycol ethers of fatty alcohols and alkylphenols.

e) Fatty acid alkylolamides.

f) Primary amine chlorides.

g) Quarternary ammonium salts.

The surfactants should be used in an amount below the critical micellar concentration to obtain the desired optimum results.

In the composition according to the invention, metal salts may be used, such as copper or zinc salts, as biological catalysts (micronutrients) or fungicides.

The compositions according to the invention may also contain hydrophilic colloids, such as gelatin, cellulose derivatives, seaweed extracts, etc., which are retainers of moisture (water) and of the metham decomposition products to extend their disinfectant action (M. I. T.).

The use of the N-methyl dithiocarbamate sodium and potassium salts, also normally called metham sodium or potas sium metham, alone in 40% solution at a rate of 1,200 to 1,500 l/hectare is known.

The metham sodium of potassium decomposes in the soil to become methylisothiocyanate (CH -N-C-S-MIT) which interferes with the redox processes of the living cell. It is therefore toxic for all living organisms and thus it controls:

- insects
- nematodes
- fungi
- weeds

After exercising a pesticidal action, the methylisothiocyanate disappears without leaving toxic residues, unlike other pesticides such as methyl bromide, etc.

The pesticidal composition constituting the first object of this invention achieves the same pesticidal action at a rate of 600-800 kg/hectare, depending on the nature of the soil (whether it is sandy, loose and sandy or clayey), of the pest to be destroyed) insect, fungus, nematode or weed) and of the degree of disinfection desired (whether it should be complete or whether only a greater commercial yield of the crop should be obtained). It provides a considerable saving of metham, thereby allowing the waiting time before sowing to be reduced and also reducing the sodium residue if potassium metham is used, the forming being harmful for vegetable growth (salinity).

Thus the treatment achieves a constant revaluation of the soil without problems of toxic residues.

Furthermore, the quality of cultivatable land depends on the balance between the elements required for plant growth, i.e. the soil, water and air balance.

It is of interest to entrap the maximum amount of water, since plants need moisture to be able to absorb the mineral salts and develop themselves.

It is an object of the present invention to attain, by way of the proposed composition, an improvement of the following soil properties.

a) Porosity of the soil.

b) Uniform distribution of the liquid disinfectant.

c) Water retention.

d) Savings in disinfection costs: lower application rates.

With the addition of appropriate surfactants in smaller amounts to metham sodium, the following objectives are attained:

a) Reduction of the surface tension of the liquid.

b) Reduction of the interface tension between the liquid and the soil particles.

c) Formation of film in the interfaces, whereby large clumps are avoided.

Thanks to these three actions, the following beneficial results are obtained:

Improvement of:
- The wetting action of the product on the soil.
- Uniform distribution of the disinfectant and of the water in the lateral and vertical profile.
- More uniform disinfectant action.
- A disgregation of the clumped particles of clays, slime and sand, thereby providing:
- Greater porosity, sponginess, providing optimum aeration and avoiding caking and cracking.
- Capillary texture, thereby improving the field capacity, namely:
- Water retention required for conservation and availability.
- Permeability for easy percolation and draining of the excess.
- Easy rooting of the plants, thanks to the light texture.

Increase of:
- Saprophytic microbial population, thanks to the retained moisture.
- Fertilizing material from the metham (N.S.K.).
- Availability of NPK in the soil.
- Macronutrients in the case of metham potassium.
- Soil penetration: speed and depth.

Avoidance of:
- Dry areas.
- Toxic residues and/or bad taste of vegetable foodstuffs.
- Reduction of nutritive value.

Reduction of:
- Consumption of fumigant: one third savings.
- Salinity by contribution of less sodium or only potassium.
- Post treatment waiting time before sowing.

The metal chelate salts, such as for example copper, have a fungicide action and cooperate with the M.I.T. in the destruction of fungi.

The organic sulphonates act as surfactants. The zinc or magnesium salts thereof are biologically active micronutrients.

The hydrophilic colloids such as gelatine, carboxymethylcellulose and others, seal the porosity of the soil preventing the quick disappearance of the M.I.T. in the early stages. Subsequently they are degraded by the microorganisms.

The components of their action allow the plants to develop under optimum conditions, whereby the crops increase and improve, since the root villi may develop more easily in porous soils, whereby the fruit may be better fed to achieve advanced ripening.

All of this with a low product consumption; whereby the economic yield improves considerably.

A second objective of the present invention consists of a process for the preparation of the pesticidal composition, characterised in that a pesticide is mixed with one or several surfactants and/or colloids, said pesticide being a water soluble salt of dithiocarbamate, capable of forming volatile methylisothiocyanate, such as the sodium and potassium salts.

According to another aspect of the process of this invention, the surfactant is a vegetable extract or a bio degradable synthetic product, capable of improving the water retention, graduating the infiltration and/or making it uniform.

In accordance with the process of the present invention, the surfactant is a non-ionic surfactant and is combined with the 40% pesticide aqueous solution at a rate of 0.1 to 5 % by weight.

According to another aspect to the process of this invention, the pesticide salt is a metham soluble copper chelate with a copper ion concentration of 50 to 1,000 ppm of the pesticide solution.

According to a preferred aspect to the process of this invention, the colloid is a cellulose derivative and is used at a rate of 0.1 to 1 % by weight or is constituted by gelatine, used at a rate of 0.5 to 5 % by weight.

Finally, according to another aspect to the process of the present invention, the vegetable extract is a lignin derivative used at a rate of 1 to 5 % by weight of the pesticide solution.

A third object of the present invention is the application of the pesticide composition containing N-methyl-dithiocarbamate alkali metal salts, which may be obtained by the above described process, to cultivatable soils to improve the texture and the yield thereof. This application may be made conventionally by irrigation, sprinkling, spraying, dripping or any other appropriate process for the application of a liquid composition to cultivatable soils.

The invention is explained without limitation by the following examples:

EXAMPLES:

A-PRODUCT

A 20% aqueous solution of polyoxyethylenated alkyl-phenol ether was prepared and 5 l of this aqueous solution were added to the 42 - 46% metham solution, thereby achieving and end product with 40% active ingredient.

B-APPLICATION RATE

The above product was dissolved in water to 2% and the soil was irrigated with this solution using 2 l of solution/m$^2$. Immediately afterwards, the soil was irrigated with 5-12 of water/m$^2$.

a) The surface tension of the water dropped from 72 to 45 dynes.

C-VARIANTS

Stable solutions of both sodium and potassium metham were prepared and applied to sandy soils and to loose slimy soil. The same products without additives and water alone were used as blanks.

## 1.- Penetration results:

| VARIANTS | PENETRATION SPEED MINUTES | | | |
|---|---|---|---|---|
| | LOOSE SANDY SOIL | | LOOSE SLIMY SOIL | |
| | Minutes | % Increase | Minutes | % Increase |
| Water | 58 | – | 83 | – |
| Vapam Na | 51 | 12 | 90 | (+8) |
| Vapam K | 42 | 28 | 76 | 8 |
| Vapam Na + additives | 32 | 45 | 76 | 8 |
| Vapam K + additives | 38 | 36 | 65 | 22 |

4

As shown in the table, the speed of infiltration was increased with the use of the additives by up to 45% in sandy soil.

2.- Water retention:

The moisture retention in the loose sandy soil treated increased by 15-30% in the first 10 days, while the difference was less significant in the loose clayey soil.

Water retention in loose sandy soil:

|  | % MOISTURE | | | |
|---|---|---|---|---|
| VARIANTS | POST-TREATMENT | | 10 DAYS POST | |
|  | VALUE | % | VALUE | % |
| Water | 32.0 | 100 | 12.5 | 100 |
| Vapam Na | 32.9 | 103 | 15.3 | 122 |
| Vapam K | 32.0 | 100 | 15.3 | 122 |
| Vapam Na + additives | 34.0 | 106 | 16.4 | 131 |
| Vapam K + additives | 32.6 | 102 | 15.3 | 122 |

5

Water retention in loose clayey soil:

| VARIANTS | % MOISTURE | | | |
| --- | --- | --- | --- | --- |
| | POST-TREATMENT | | 10 DAYS POST | |
| | VALUE | % | VALUE | % |
| Water | 39.4 | 100 | 21.7 | 100 |
| Vapam Na | 38.3 | 97 | 22.7 | 105 |
| Vapam K | 39.1 | 99 | 22.5 | 104 |
| Vapam Na + additives | 38.4 | 97 | 22.5 | 104 |
| Vapam K + additives | 38.1 | 97 | 22.5 | 104 |

D-FIELD RESULTS

The herbicidal action of the product formulation in the sandy soil was almost 2.5 times greater than the product alone, with almost the same results being achieved with 1,000 l/ha of the formulated product vs 2,500 l/ha of the product alone.

The additional advantages was the possibility of rapid transplanting after 1 month and immediately after airing.

E-LABORATORY RESULTS

The formulated product was observed to be stable after several years on the shelf, and there was no variation in the decomposition rate in the soil.

**Claims**

1.-A pesticidal composition, characterized in that it is constituted by an alkali metal salt of N-methyl-dithio-carbamate, one or several surfactants, salts and/or colloids.

2.- A pesticidal composition according to claim 1, characterized in that the N-methyl-dithiocarbamate salts are the sodium, potassium salts and zinc, copper chelates and the like.

3.- A pesticidal composition according to claim 1, characterized in that the surfactant is a vegetable extract or a biodegradable synthetic product, capable of improving the water retention, graduating the infiltration and/or making it uniform.

4.- A pesticidal composition according to claim 1, characterized in that the surfactant is a non-ionic surfactant present in an amount of 0.1 to 5 % by weight of a 40% pesticide solution.

6

5.- The pesticidal composition according to claim 1, characterized in that the salt is an N-methyl-dithiocarbamate soluble copper chelate, with a copper ion concentration lying between 50 and 1,000 ppm of the pesticidal solution.

6.- A pesticidal composition according to claim 1, characterized in that the colloid is a cellulose derivative, present in the pesticidal composition in an amount of 0.1 to 1 % by weight or gelatine, present in the pesticidal composition in an amount of 0.5 to 5 % by weight.

7.- A pesticidal composition according to claim 3, characterized in that the vegetable extract is a lignin derivative present in the pesticidal composition in an amount of 1 to 5% by weight of the pesticidal solution.

8.- A process for the preparation of the pesticidal composition according to claims 1 to 7, characterized in that it comprises preparing an aqueous solution of a non-ionic surfactant and adding thereto an amount of aqueous solution of N-methyl-dithiocarbamate or one of the alkali metal salts thereof, in an amount such as to give an approximately 40% solution of N-methyl-dithiocarbamate, or of one of the alkali metal salts thereof, and adding the remaining additives before, during or after dissolution in water, up to an approximate concentration of 40 % by weight of N-methyl-dithio-carbamate or one of the alkali metal salts thereof.

9.- Application of the pesticidal composition, prepared according to the process of claim 8, to cultivatable soils to improve the texture and water retention thereof, with graduation of the infiltration and/or the uniformization thereof.